Europäisches Patentamt

European Patent Office

Office européen des brevets

(11) Publication number: **0 277 901 B1**

## EUROPEAN PATENT SPECIFICATION

(45) Date of publication of patent specification: **05.08.92**    (51) Int. Cl.5: **C01C 1/18**

(21) Application number: **88500004.2**

(22) Date of filing: **20.01.88**

(54) **Process and installation for the production of ammonium nitrate.**

(30) Priority: **21.01.87 ES 8700148**

(43) Date of publication of application:
**10.08.88 Bulletin  88/32**

(45) Publication of the grant of the patent:
**05.08.92 Bulletin  92/32**

(84) Designated Contracting States:
**BE DE FR GB GR IT LU NL**

(56) References cited:
**WO-A-70/00159**
**DE-B- 1 197 857**
**FR-A- 1 321 549**
**GB-A- 2 096 124**

(73) Proprietor: **UNION EXPLOSIVOS RIO TINTO, S.A.**
**Paseo de la Castellana 20**
**E-28046 Madrid(ES)**

(72) Inventor: **Salcedo Gomez, Rafael**
**Padre Claret 22**
**E-Madrid(ES)**
Inventor: **Lopez Nino Hernansaez, Jose Luis**
**Padre Larana 2**
**E-Huelva(ES)**
Inventor: **Olivares Del Valle, Joaquin**
**Monte Carmelo 17**
**E-Sevilla(ES)**

(74) Representative: **Garcia Cabrerizo, Francisco**
**OFICINA GARCIA CABRERIZO S.L. Vitruvio 23**
**E-28006 Madrid(ES)**

## Description

This invention relates to a process and installation for the production of concentrated aqueous solutions of ammonium nitrate.

Introduction

Ammonium nitrate, which is used as a fertilizer and in the manufacture of explosives, is produced industrially by the neutralization reaction between dilute nitric acid of a concentration of 50 to 60 weight % and anhydrous ammonia. The resulting ammonium nitrate solution is then concentrated sufficiently to be used as feed for granulation or prilling units (95 weight % or more).

The reaction between nitric acid and ammonia is highly exothermic with in theory the evolution of sufficient heat to evaporate all the water accompanying the 50 - 60 weight % nitric acid. However, for practical purposes the vapour evolved in this neutralization is not hot enough to be useful in the subsequent step of concentration by evaporation of the resulting ammonium nitrate solution, and so the system must be supplied with external heat.

The point is that the processes described in many patents relating to the preparation of ammonium nitrate, which can be broken down into vacuum or atmospheric pressure processes and positive pressure processes, do not solve the problem satisfactorily:

A.- Vacuum or atmospheric pressure processes.

The ammonium nitrate yielded has a concentration of 70 to 85 weight % and the vapour produced in the reaction is not hot enough to be used in the step of evaporating the ammonium nitrate solution; its only use is for preheating the reactor inlet and outlet streams. An evaporation stage using external heating is therefore necessary.

Other disadvantages include the considerable size of the necessary equipment and the substantial energy costs of breaking down the usually contaminated ted residual vapour of the reaction system.

B.- Pressure processes

In some cases where working is carried out at a pressure of 4-8 bars absolute and with the use of nitric acid in a concentration of approximately 60 weight % or more, ammonium nitrate concentrations of 95 weight % or more are yielded without a supply of external heat; however, for this to be possible the nitric acid feed temperature must be 140°C and the reactor temperature must be 200-240°C. These high temperatures lead to corrosion problems (special materials have to be used) and risks of explosion in the reactor which can be avoided only by means of sophisticated control systems.

The process for producing concentrated solutions of ammonium nitrate according to WO-A-87,000,150 uses only one depressurization step of the $NH_4NO_3$ solution which is produced in a tubular reactor. This depressurization step allows the separation between the ammonium nitrate solution from the vapour phase, this latter being used to preheat the reactants before entering into the tubular reactor. This process produces only 88.3% of ammonium nitrate.

Thus, the purpose of the invention is to obtain a greater percentage of ammonium nitrate.

Description of the invention

This invention relates to a process for preparing concentrated ammonium nitrate solutions and to the installation for performing the process.

According to the process, ammonium nitrate solutions of a concentration greater than 95% and suitable for subsequent granulation or prilling treatment are yielded without a supply of external heat to the system and starting from nitric acid having a concentration of 50 to 60% weight % and from anhydrous ammonia in moderated conditions.

This invention also makes it possible to combine in a single step and apparatus the neutralization reaction between nitric acid and ammonia and the concentration of the ammonium nitrate solution yielded by using the heat generated in the reaction, a low contaminants content residual vapour also being yielded which is useful for preheating the reactor feed streams to optimal operating conditions.

The installation in which ammonium nitrate is prepared by the process according to the invention is of reduced size and easy scalation and designed to ensure efficient utilization of the energy produced in the

2

reaction by means of the high speeds and turbulence occurring in the reaction so that the system is easily operable and safe since the quantities of concentrated ammonium nitrate solution present in the installation at any time are very small.

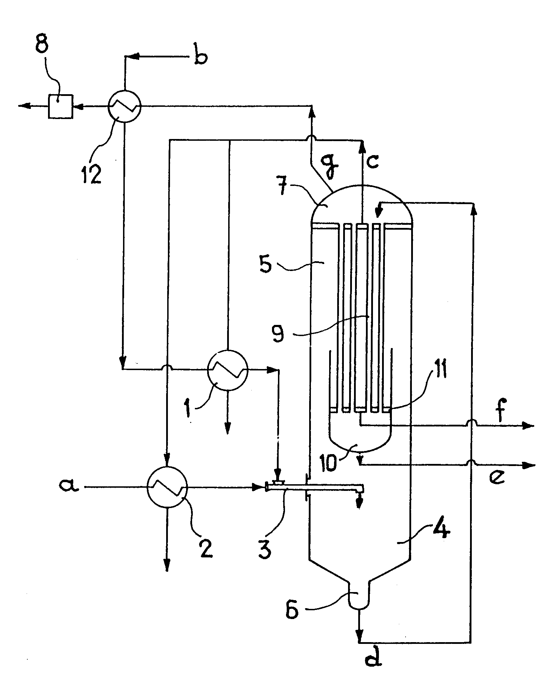

A detailed description will be given hereinafter of the process and installation according to this invention, reference being made to the accompanying drawing in which small letters denote streams and numbers denote elements of the installation.

The feedstocks of the reaction, namely 50 - 60 % weight nitric acid (a) and anhydrous ammonia (b), are heated with residual vapour from the reaction (c) in heat exchangers (1) and (2) to temperatures of 50 - 75 °C and 70 - 90°C respectively and are introduced into a tubular T reactor (3) at a pressure of 4 - 6 bars absolute. Contact takes place between the two reactants at high speed and with high turbulence in the reactor (3). The two-phase neutralization reaction occurs at high speed along the narrow cross-section chamber of the reactor (3), generating enough heat to evaporate a major part of the water of the nitric acid solution.

The reaction products are delivered to a discharge chamber (4) maintained at a pressure of 3 - 4 bars absolute and at a temperature of 150 - 170°C; the vapour phase rises from the chamber (4) to a concentration chamber (5) to be collected at the top as the residual vapour stream (c) which goes to the heat exchangers (1) and (2) to preheat the feedstocks.

The liquid phase, in the form of a 75 - 85 weight % ammonium nitrate solution, is collected at the bottom of the chamber (6) and rises therefrom because of a pressure difference in a stream (d) to the chamber (7) above the concentrator. The chamber (7) is maintained at a pressure of 0,3 bar absolute by means of a vacuum unit (8), so that a flash distillation occurs from the 3 - 4 bars absolute of the bottom discharge chamber up to this pressure.

From the flash chamber (7) the ammonium nitrate solution descends through a number of pipes (9) of the concentration chamber (5) in the form of a film. During this descent and at temperatures of 125 - 145°C the ammonium nitrate solution exchanges heat with the rising vapour from the discharge chamber so that water is evaporated and concentrations of 95% or more are obtained.

The concentrated solution is finally collected at the bottom (10) of the concentration chamber to provide the stream (e) of concentrated ammonium nitrate product. A condensate stream (f) is also collected in the zone where the pipes of the concentration chamber (11) end.

The vacuum unit (8) removes residual vapour from the flash chamber (7) to form the stream (g) which is used to evaporate the ammonia by heat exchange in the evaporator (12) before the ammonia passes through the heat exchanger (1).

EXAMPLE

Three different cases I, II and III will be given hereinafter as an example of the operation of the installation with various concentrations of the nitric acid feeding the reactor and/or of its temperature.

| FEED STREAMS | | | |
|---|---|---|---|
| Initial temperature of nitric acid (°C) | 25 | 25 | 25 |
| Concentration of nitric acid (wt.%) | 52 | 52 | 50 |
| Nitric acid feedstock temperature (°C) | 55 | 70 | 70 |
| Ammonia feedstock temperature (°C) | 80 | 80 | 80 |

| DISCHARGE CHAMBER | | | |
|---|---|---|---|
| Pressure in discharge chamber (bars abs.) | 3 | 3 | 3 |
| Temperature of nitrate solution (°C) | 165 | 167 | 162 |
| Concentration of nitrate solution in wt.% | 75.4 | 77.1 | 73.1 |
| Rate of flow of vapour (kg/t of nitrate) | 400 | 429 | 419 |

3

| FLASH CHAMBER | | | |
|---|---|---|---|
| Pressure at the top (bar abs.) | 0.3 | 0.3 | 0.3 |
| Temperature in flash chamber (°C) | 93 | 95 | 91 |
| Concentration of nitrate solution in wt.% | 81 | 83 | 79 |
| Rate of vapour flow (kg/t of nitrate) | 99 | 95 | 103 |

| CONCENTRATION CHAMBER | | | |
|---|---|---|---|
| Temperature of nitrate solution (°C) | 129 | 129 | 129 |
| Condensation temperature (°C) | 134 | 134 | 134 |
| Concentration of outgoing solution in wt.% | 95 | 96 | 95 |
| Condensate (kg/t of nitrate) | 214 | 184 | 256 |
| Useful vapour (kg/t of nitrate) | 324 | 319 | 303 |
| Surplus vapour (kg/t of nitrate) | 116 | 134 | 47 |

**Claims**

1. A process for the production of concentrated aqueous solutions of ammonium nitrate starting from 50-60 weight % nitric acid and anhydrous ammonia introduced into a tubular reactor in which an exothermic neutralization reaction occurs between the two reactants giving a solution of ammonium nitrate and producing a gas phase of vapour generated by the heat evolved in the reaction, said gas phase being separated from the ammonium nitrate solution in a pressurized discharge chamber, characterized in that it is carried out in the following steps:

   (a) subjecting the ammonium nitrate solution separated from the gas phase in said pressurized discharge chamber to a sudden pressure drop in a vacuum discharge chamber with separation of a further quantity of vapour which is removed through a vacuum line; and

   (b) immediate passage of the ammonium nitrate solution through a combined evaporator-concentrator adjacent the discharge chamber of the above step where heat exchange occurs with a vapour stream consisting of the gas phase separated from the ammonium nitrate solution in said pressurized discharge chamber, resulting in the end-product stream of concentrated ammonium nitrate solution and in a residual vapour stream.

2. A process according to claim 1, characterized in that the feed streams to the reactor are at a pressure of 4 to 6 bars absolute and at a temperature of 50 to 75°C in the case of the nitric acid and of 70 to 90°C in the case of the ammonia.

3. A process according to claim 1, characterized in that the said discharge chamber is at a pressure of 3 to 4 bars absolute and at a temperature of 150 to 170°C.

4. A process according to claim 1, characterized in that the combined avaporator-concentrator is at a presure of 0,2 to 0,4 bar absolute and at a temperature of 125 to 145°C.

5. An installation for the operation of the process according to claims 1-4, comprising a tubular reactor and a discharge chamber of the reactor, characterized in that:

   (a) said tubular reactor is a tubular T-reactor;

   (b) said discharge chamber of the reactor operating under pressure is provided with an outlet for a liquid stream in the bottom part;

   (c) there is provided a combined evaporator-concentrator which forms part of the top part of the discharge chamber and through which vapour originating in the discharge chamber rises, and which has at the bottom a condensate outlet;

   (d) there is provided a vacuum flash chamber which is adjacent to the top part of the combined evaporator-concentrator and where the liquid stream separated in the discharge chamber arrives as a result of pressure differences, thereafter to continue descending along the combined evaporator-concentrator;

(e) there is provided a collector which is disposed at the bottom of the combined evaporator-concentrator and from which the stream of concentrated product is removed;

(f) there is provided a vacuum unit whose line is connected to the flash chamber;

(g) there is provided an ammonia feed stream evaporator using the heat of the residual vapour removed through the vacum line; and

(h) respective heat exchangers are provided to preheat the feed streams using the heat of the residual vapour leaving the top part of the combined evaporator-concentrator.

**Revendications**

1. Procédé pour la production de solutions aqueuses concentrées de nitrate d'ammonium en partant de 50-60% en poids d'acide nitrique et d'ammoniac anhydre introduit dans un réacteur tubulaire dans lequel a lieu une réaction de neutralisation exothermique entre les deux réactants donnant une solution de nitrate d'ammonium et produisant une phase gazeuse de vapeur produite par la chaleur dégagée dans la réaction, ladite phase gazeuse se séparant de la solution de nitrate d'ammonium dans une chambre de décharge sous pression, caractérisé en ce qu'il est mis en oeuvre dans les étapes suivantes:

(a) soumission de la solution de nitrate d'ammonium séparée de la phase gazeuse dans ladite chambre de décharge sous pression à une chute brutale de pression dans une chambre de décharge sous vide avec séparation d'une autre quantité de vapeur qui est éliminée à travers une ligne à vide; et

(b) passage immédiat de la solution de nitrate d'ammonium à travers un évaporateur-concentrateur combiné adjacent à la chambre de décharge de l'étape antérieure où a lieu un échange thermique avec un courant de vapeur consistant en la phase gazeuse séparée de la solution de nitrate d'ammonium dans ladite chambre de décharge sous pression, produisant le courant de produit final de solution de nitrate d'ammonium concentrée et un courant de vapeur résiduelle.

2. Procédé selon la revendication 1, caractérisé en ce que les courants d'alimentation du réacteur sont à une pression de 4 à 6 bars absolus et à une température de 50 à 75°C dans le cas de l'acide nitrique et de 70 à 90°C dans le cas de l'ammoniac.

3. Procédé selon la revendication 1, caractérisé en ce que la chambre de décharge est à une pression de 3 à 4 bars absolus et à une température de 150 à 170°C.

4. Procédé selon la revendication 1, caractérisé en ce que l'évaporateur-concentrateur combiné est à une pression de 0,2 à 0,4 bars absolus et à une température de 125 à 145°C.

5. Installation pour la réalisation du procédé selon les revendications 1-4, comprenant un réacteur tubulaire et une chambre de décharge du réacteur, caractérisée en ce que:

(a) ledit réacteur tubulaire est un réacteur-T tubulaire;

(b) ladite chambre de décharge du réacteur fonctionnant sous pression est munie d'une sortie pour un courant liquide dans la partie inférieure;

(c) il est prévu un évaporateur-concentrateur combiné faisant partie de la partie supérieure de la chambre de décharge et à travers lequel monte la vapeur produite dans la chambre de décharge, et qui a au fond une sortie de condensat;

(d) il est prévue une chambre de détente sous vide qui est adjacente à la partie supérieure de l'évaporateur-concentrateur combiné et où le courant liquide séparé dans la chambre de décharge arrive par suite de différences de pression, pour continuer ensuite à descendre le long de l'évaporateur-concentrateur combiné;

(e) il est prévu un collecteur qui est disposé au fond de l'évaporateur-concentrateur combiné et duquel est retiré le courant de produit concentré;

(f) il est prévue une unité à vide dont la ligne est reliée à la chambre de détente;

(g) il est prévu un évaporateur de courant d'alimentation d'ammoniac utilisant la chaleur de la vapeur résiduelle retirée par l'intermédiaire de la ligne à vide; et

(h) ils sont prévus des échangeurs de chaleur respectifs pour préchauffer les courants d'alimentation à l'aide de la chaleur de la vapeur résiduelle quittant la partie supérieure de l'évaporateur-concentrateur combiné.

**Patentansprüche**

1. Verfahren zur Herstellung von konzentrierten wässrigen Lösungen von Ammoniumnitrat ausgehend von 50 - 60 Gew. % iger Salpetersäure und wasserfreiem Ammoniak, die in einen Rohr-Reaktor eingeführt werden, in welchem eine exotherme Neutralisationsreaktion zwischen den beiden Reaktanten stattfindet, wobei eine Lösung von Ammoniumnitrat und eine Gasphase an dem durch die bei der Reaktion entwickelte Wärme erzeugten Dampf erhalten wird, wobei die Gasphase von der Ammoniumnitratlösung in einer unter Druck stehenden Austragskammer getrennt wird, **dadurch gekennzeichnet,** daß es in folgenden Stufen durchgeführt wird:
   a) Unterwerfen der in der unter Druck stehenden Austragskammer von der Gasphase abgetrennten Ammoniumnitratlösung einem plötzlichen Druckabfall in einer Vakuum-Austragskammer unter Abtrennung eines weiteren Dampfanteils, der durch eine Vakuumleitung abgezogen wird und
   b) unverzügliches Hindurchschicken der Ammoniumnitratlösung durch eine an die Austragskammer der Stufe (a) angrenzende kombinierte Verdampfungs-Konzentrations-Einrichtung, wo ein Wärmeaustausch mit dem Dampfstrom stattfindet, der aus der von der Ammoniumnitratlösung In der unter Druck stehenden Austragskammer abgetrennten Gasphase besteht, wobei der Endprodukstrom an konzentrierter Ammoniumnitratlösung und ein Rest-Dampfstrom anfällt.

2. Verfahren nach Anspruch 1, dadurch gekennzeichnet, daß die Beschickungsströme für den Reaktor einen Druck von 4 bis 6 bar absolut und eine Temperatur von 50 bis 75°C für die Salpetersäure und von 70 bis 90° C für den Ammoniak aufweisen.

3. Verfahren nach Anspruch 1, dadurch gekennzeichnet, daß die Austragskammer unter einem Druck von 3 bis 4 bar absolut steht und eine Temperatur von 150 bis 170° C aufweist.

4. Verfahren nach Anspruch 1, dadurch gekennzeichnet, daß die kombinierte Verdampfungs-Konzentrations-Einrichtung unter einem Druck von 0,2 bis 0,4 bar absolut steht und eine Temperatur von 125 bis 145° C aufweist.

5. Anlage zur Durchführung des Verfahrens nach den Ansprüchen 1 bis 4, umfassend einen Rohr-Reaktor und eine Austragskammer des Reaktors, dadurch gekennzeichnet,
   (a) daß der Rohrreaktor ein Rohr-T-Reaktor ist,
   (b) daß die Austragskammer des Reaktors, die unter Druck arbeitet, im Bodenbereich mit einem Auslaß für einen Flüssigstrom versehen its;
   (c) daß eine kombinierte Verdampfungs-Konzentrations-Einrichtung vorgesehen ist, welche einen Teil des oberen Bereichs der Austragskammer bildet und durch welche in der Austragskammer entstehender Dampf aufsteigt, und die am Boden einen Kondensatauslaß aufweist;
   (d) daß eine Vakuumflash-Kammer vorhanden ist, die an den oberen Bereich der kombinierten Verdampfungs-Konzentrations-Einrichtung anschließt und in welche der in der Austragskammer abgetrennte Flüssigstrom als Ergebnis der Druckunterschiede gelangt, um danach entlang der kombinierten Verdampfungs-Konzentrations-Einrichtung weiter nach unten abzufließen;
   (e) daß am Boden der kombinierten Verdampfungs-Konzentrations-Einrichtung ein Sammler angeordnet ist, aus dem der Strom an konzentriertem Produkt abgezogen wird;
   (f) daß eine Vakuumeinheit vorgesehen ist, deren Leitung mit der Flashkammer verbunden its;
   (g) daß ein Verdampfer für den Ammoniak-Beschickungsstrom vorhanden ist, der die Wärme des über die Vakuumleitung abgezogenen Restdampfes ausnutzt und
   (h) daß entsprechende Wärmetauscher für die Vorerhitzung der Beschickungsströme vorgesehen sind, welche die Wärme des den oberen Bereich der kombinierten Verdampfungs-Konzentrations-Einrichtung verlassenden Restdampfes ausnutzen.